(19) Europäisches Patentamt

European Patent Office

Office européen des brevets

(11) Veröffentlichungsnummer: **0 377 068 B1**

(12) **EUROPÄISCHE PATENTSCHRIFT**

(45) Veröffentlichungstag der Patentschrift: **19.11.92**

(21) Anmeldenummer: **89100525.8**

(22) Anmeldetag: **13.01.89**

(51) Int. Cl.⁵: **A61C 8/00**

(54) **Schraubenimplantat zum Verankern von prothetischen Endkonstruktionen im Mund.**

(30) Priorität: **31.12.88 DE 3844467**

(43) Veröffentlichungstag der Anmeldung:
**11.07.90 Patentblatt 90/28**

(45) Bekanntmachung des Hinweises auf die
Patenterteilung:
**19.11.92 Patentblatt 92/47**

(84) Benannte Vertragsstaaten:
**AT BE CH DE ES FR GB GR IT LI LU NL SE**

(56) Entgegenhaltungen:
**WO-A-87/00030      DE-A- 2 419 080**
**DE-A- 2 609 262      FR-A- 2 318 617**
**GB-A- 2 063 680      GB-A- 2 199 626**
**US-A- 4 424 037**

(73) Patentinhaber: **Servin, P.C., Dr.**
**Lindenstrasse 24**
**W-4630 Bochum 6(DE)**

(72) Erfinder: **Servin, P.C., Dr.**
**Lindenstrasse 24**
**W-4630 Bochum 6(DE)**

(74) Vertreter: **Herrmann-Trentepohl, Werner,**
**Dipl.-Ing. et al**
**Schaeferstrasse 18**
**W-4690 Herne 1(DE)**

EP 0 377 068 B1

**Beschreibung**

Die Erfindung betrifft ein Schraubenimplantat zum Verankern von prothetischen Endkonstruktionen im Mund gemäß dem Oberbegriff des Anspruches 1.

Die mit dem erfindungsgemäßen Schraubenimplantat im Mund verankerten Endkonstruktionen können Zahnkronen, Brücken o.dgl. sein. Da es aus einer Baueinheit besteht, ist es einteilig in dem Sinne, daß Kopf, Schaft, Kern und Helix durch einmaliges Einschrauben implantiert werden. Hierbei wird die erforderliche mechanischen Festigkeit, welche u.a. das Abbrechen des Implantates verhindert, durch den Werkstoff der Baueinheit gewährleistet. Insbesondere handelt es sich um Titan bzw. Legierungen, wie Chrom-Kobalt-Molybdän-, Silber-Paladium- oder Gold-Paladium-Legierungen.

Die Formgebung des erfindungsgemäßen Schraubenimplantats zielt darauf ab, mit dem Einschrauben ihren größeren Teil zur Anlage an die Spongiosa des Knochens zu bringen. Daher weist die Vorbohrung für den Kern des Implantats einen wesentlich geringeren Durchmesser als die den Kern umgebende Helix auf und entspricht etwa dem Außendurchmesser der Baueinheit an der dicksten Stelle. Die den vorzugsweise konisch zur Spitze zulaufenden Kern umgebende Helix bildet eine Metallschneide, die beim Einschrauben in die Knochensubstanz eindringt, in der deswegen das Implantat sofort einen axialen und radialen Halt gewinnt.

Solche Implantate haben einerseits den Vorteil, daß sie das Insertionstrauma gering halten und andererseits durch Wahl entsprechender Helixdurchmesser einen guten Halt in dem Knochen gewährleisten.

Schraubenimplantate dieser Art sind bereits bekannt (DE-OS 31 38 602). Ihre gesamte Oberfläche besteht aus der für die Baueinheit verwendeten Metalllegierung. Dadurch kommt es auf der gesamten, in den Knochen eingeführten Länge und Breite des Implantates zur Ausbildung einer fasrigen Bindegewebsschicht bzw. einer unmittelbaren Apposition des Knochens je nach Metallegierung. Die faserige Bindegewebsschicht hat eine etwa der Wurzelhaut entsprechende Eigenschaft und führt dementsprechend eine federnde Pufferung des im Knochen sitzenden Implantates herbei. Während aber die Wurzelhaut der natürlichen Zahnwurzel eine erwünschte Beweglichkeit unter den Kaubelastungen gewährt, welche den Abbau der Knochensubstanz verhindert, ist die Bildung einer ausgedehnten Bindegewebsschicht bei Schraubenimplantaten nicht im gleichen Maße vorteilhaft. Das ist eine Folge der durch die technische Formgebung erzwungenen Oberfläche, was zu axialen und radialen Bewegungen des Implantates führt, die den Erfolg infrage stellen.

Gemäß WO 87/00030 wird ein Implantat bereitgestellt, bei dem auf einem schraubenförmigen Teil (A) aus einem behandelten Metall ein Teil (B) aus thermoplastischem Material sitzt, das als selbstverriegelnder Kopf dient. Die Metallbehandlung des schraubenförmigen Teils (A) besteht in der Aufbringung eines Goldüberzugs zur Erhöhung der Bioverträglichkeit.

Der Erfindung liegt die Aufgabe zugrunde, ein Schraubenimplantat der eingangs beschriebenen Art zu schaffen, welches bessere Erfolge in der Implantationstechnik erzielt.

Gelöst wird diese Aufgabe erfindungsgemäß mit den Merkmalen des Patentanspruches 1. Weitere Merkmale der Erfindung sind Gegenstand der Unteransprüche.

Die Erfindung ermöglicht die Beibehaltung des eingangs beschriebenen Vorteils bekannter Schraubenimplantate, das Insertionstrauma so gering wie möglich zu halten, weil die Helix sich mit ihrer Metallschneide infolge ihrer Metalloberfläche in den Knochen einschneidet und der Durchmesser des Insertionsschachtes dementsprechend gering gehalten werden kann. Andererseits schafft die Erfindung auf einem möglichst großen Teil des Implantates wegen des keramischen Überzuges eine Oberfläche, welche eine knöcherne Einheilung ohne die Zwischenlagerung von Bindegewebszellen gestattet. Dadurch wird chronischen Entzündungen vorgebeugt und auf der an sich geringen Gesamtoberfläche eines Schraubenimplantates eine erhebliche Steigerung der Festigkeit seines Sitzes im Knochen erreicht. Trotz des großflächigen keramischen Implantatüberzuges bleibt ein Teil seiner metallischen Oberfläche erhalten, so daß es in diesem Bereich zu der beschriebenen Bildung einer faserigen Bindegewebsschicht kommt, die das Implantat abpuffert. Dadurch entsteht insgesamt ein zweiphasiges Implantat, dessen Sitz im Knochen zugleich fest und nachgiebig ist. Unter der Kaubelastung kommt es daher nicht mehr zum Abbau von Knochensubstanz und der damit verbundenen Lockerung.

Die erfindungsgemäße Implantationstechnik, welche hierdurch erreicht wird, erlaubt nach der Implantation eine längere Ruhepause bei abgedecktem Implantat, in der sich die beschriebenen Vorgänge abspielen, die den Sitz des Implantates im Knochen bewirken. Erst dann wird der Schleimhautlappen entfernt und der Kopf für die Befestigung der Endkonstruktion freigelegt. Nach dem Patentanspruch 2 ist hierauf das neue Implantat zweckmäßig eingerichtet.

Insbesondere eignet sich für den keramischen Implantatüberzug nach der Erfindung ein solcher mit den Merkmalen des Anspruches 3. Glaskeramiken dieser Art lassen sich als homogene Glasfritten aufschmelzen. Als Ergebnis thermischer Behandlung kommt es zu einer Kristallisation, bei der aus kristallinen Phasen Phlogopit- und Apatitkristalle aus dem Glas ausgeschieden werden. Zwischen einer solchen Glaskeramik und den Körperflüssigkeiten im Mund treten wünschenswerterweise nur geringe Ionenaustauschprozesse auf, so daß sich die Voraussetzungen für eine gute Langzeitstabilität des erfindungsgemäßen Schraubenimplantates ergeben.

Für die Erfindung ist es allerdings nicht erforderlich, einen bioaktiven Implantatüberzug zu wählen. Insbesondere unter dem Gesichtspunkt der normativ-forensischen Schwierigkeiten können sich Implantatüberzüge mit den Merkmalen des Patentanspruches 4 empfehlen, die infolge ihrer bioinerten Eigenschaften nicht als Arzneimittel i.S. der Arzneimittelgesetzgebung gelten. Die Wirkung bioinerter Keramiken beruht auf ihrer großporigen Oberfläche und darauf, das Porendurchmesser von 300-500 μm das Einwachsen von Knochengewebe in die Porenhöhlungen erlauben. Solche Keramiken lassen sich u.a. im Flammspritzverfahren aufbringen.

Die Erfindung wird im folgenden anhand von Ausführungsbeispielen näher erläutert, die in der Zeichnung wiedergegeben ist.

Es zeigen

Fig. 1    im Längsschnitt ein Schraubenimplantat gemäß der Erfindung,

Fig. 2    den Kopf des Gegenstandes der Fig. 1 in Draufsicht,

Fig. 3    das Attachment nach Fig. 1 in Draufsicht,

Fig. 4    ein Attachment in abgeänderter Ausführung und in Seitenansicht,

Fig. 5    eine Draufsicht auf den Gegenstand der Fig. 4 und

Fig. 6    einen mit beiden Ausführungsformen des Attachments zusammenwirkenden Teil einer Prothese.

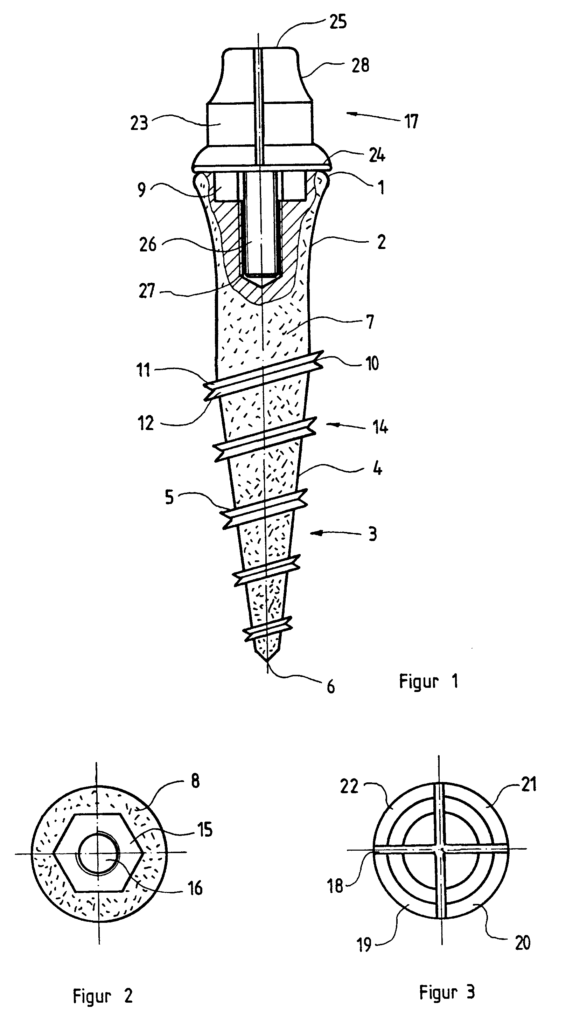

Das Schraubenimplantat nach Fig. 1 bildet eine Baueinheit, die sich als Ganzes in einen vorher im Knochen hergestellten Schacht einschrauben läßt. Dazu dient ein mit Schlüsselflächen versehener Kopf (1), an den sich ein nach innen eingezogener, diaboloförmiger Hals (2) anschließt. Diese nach innen eingezogene Formgebung vergrößert die Oberfläche und ist außerdem für die angestrebte Verbindung mit dem Knochen vorteilhaft.

Der Hals (2) geht in der mit (3) bezeichneten Baueinheit in das obere Ende eines Kernes (4) über, den eine Helix (5) umgibt. Der Kern ist konisch in Richtung des Schachttiefsten und weist eine kegelförmige Spitze (6) auf. Der Kopf (1) und der Hals (2), sowie der Kern sind mit einem keramischen Implantatüberzug (7) versehen. Dieser Überzug erstreckt sich auf der Oberseite (8) des Kopfes und reicht bis zu einer Aussparung (9).

Die Oberflächen der Helix (5) sind frei von keramischem Implantatüberzug.

Die Fig. 1 Zeigt die Randausbildung der Helix (5). Hiernach ist der Rand (14) der Helix auf deren gesamten Länge mit einem V-förmigen Einschnitt (10) versehen. Die Spitze des V-förmigen Einschnittes weist auf den Kern, so daß sich zwei divergierende Einschnittflächen (11, 12) ausbilden. Hierdurch wird erreicht, daß die Helix sich mit den scharfen Rändern des V-förmigen Einschnittes in das Knochenmaterial einschneiden kann. Außerdem wird die Oberfläche der Helix vergrößert, auf der sich später die faserige Bindegewebsschicht ausbildet. Ebenso wie die gesamte Helixoberfläche sind daher auch die Flächen (16 und 17) frei von keramischem Implantatüberzug.

Der Kopf (2) des Implantates weist zum oberen Teil der Aussparung (9) Schlüsselflächen (15) für einen Imbusschlüssel auf. Daran schließt sich ein zylindrischer und mit diesem Gewinde versehener Abschnitt (16) der Aussparung (9) an.

Zum Implantieren wird in den Knochen des Ober- oder des Unterkiefers der beschriebene Schacht gebohrt. Beispielsweise im Unterkiefer durchdringt der Schacht die obere Corticalis und steht in der Spongiosa, wird aber aus Sicherheitsgründen nicht bis zur Gegencorticalis geführt. Nach dem Einsetzen der kegelförmigen Spitze (6) der Baueinheit (3) wird diese mit Hilfe des Imbusschlüssels und der Schlüsselflächen (15) in den Knochen eingeschraubt, wobei die Helix (5) in die Spongiosa eindringt. Durch das Einschrauben wird das Implantat vollständig im Knochen versenkt. Danach wird ein Schleimhautlappen über die Oberseite (8) des Kopfes (1) gezogen. Das Implantat ruht danach im Knochen, bis sich dieser an das Implantat gewöhnt hat. Dabei bildet sich die ankylotische Verbindung aus, welche die Belastungsfähigkeit des Implantates herbeiführt.

Zur Befestigung der prothetischen Endkonstruktion dient ein Verbindungselement, welches allgemein mit (17) bezeichnet ist. Das Verbindungselement oder Attachment ist in der Ausführungsform nach Fig. 3 als Druckknopf ausgebildet. Es besitzt dementsprechend einen Kreuzschlitz (18), durch den vier Federbacken (19-22) entstehen. Seine Außenkontur weist allgemein gesehen einen zylindrischen Abschnitt (23) auf, welcher über einen Hals (24) in den Kopf (25) des Druckknopfes übergeht. Der zylindrische Abschnitt (23) trägt einen konischen Flansch (24), der die innere Stirnseite des Verbindungselementes abschließt. Über diese steht ein Zapfen (26) vor, der mit Gewinde versehen ist.

Für den Zapfen (26) ist die zylindrische Fortsetzung (16) der Aussparung (9) vorgesehen, die bei (27) mit Innengewinde versehen ist.

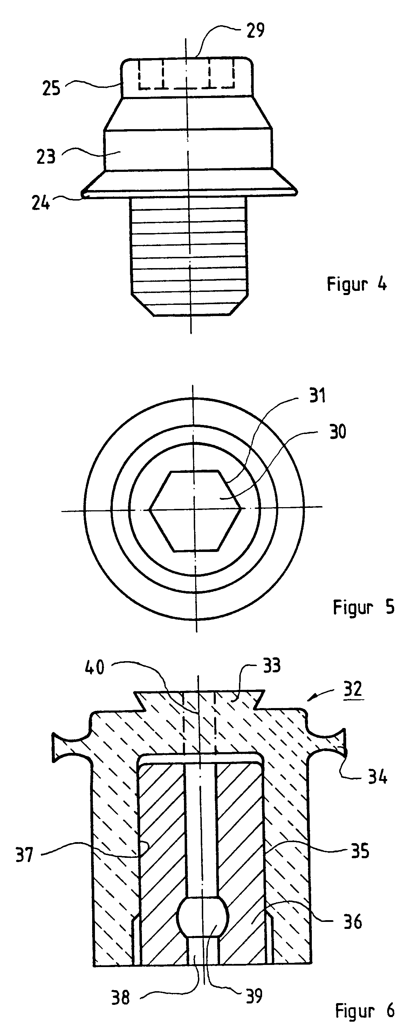

Die in den Fig. 4 und 5 dargestellte abgeänderte Ausführungsform des Verbindungselementes weist ebenfalls den zylindrischen Abschnitt (23) und den abschließenden Flansch (24) auf. Der Kopf (25) ist jedoch im Gegensatz zur Ausführungsform nach Fig. 3 auf seiner Oberseite (29) bei (30) ausgespart. Die Aussparung ist mit einem Sechskantimbusschlüssel zu erreichen, für den Schlüsselflächen (31) vorgesehen sind. Diese Anordnung ersetzt den Kreuzschlitz (18).

Gemäß der Darstellung der Fig. 6 dient zum Anschluß der nicht dargestellten Prothese an das Verbindungselement (17) ein aus Kunststoff bestehender, geflanschter Zapfen (32) mit einem eingezogenen Hals (33) und einem umlaufenden Flansch (34). Dieser Zapfen wird in den Kunststoffteil der Prothese eingesetzt und überträgt die Kaubelastdung über das Attachment auf das Implantat. In einer axialen Aussparung (35) sitzt eine Matrize (36) aus Metall. Ihr mit Außengewinde versehener oberer Abschnitt (37) wird in die mit Innengewinde versehene Aussparung (35) eingeschraubt.

Die Matrize weist eine axiale Bohrung (38) auf. In dieser ist eine ballenförmige Erweiterung (39) vorgesehen, in die der Druckknopfkopf (25, 28) des Verbindungselementes (17) einrasten kann. Für die Ausführungsform nach den Fig. 4 und 5 ist die durchgehende Bohrung (38) vorgesehen. Sie ermöglicht es, einen bei (40) angedeuteten Kanal herzustellen, durch den sich der Imbusschlüssel zum Lösen des Verbindungsmittels nach den Fig. 4 und 5 einführen läßt.

Nachdem das Implantat (3) eine hinreichende Zeit im Knochen geruht hat, wird der die Oberseite (8) des Kopfes (1) überdeckende Lappen entfernt, so daß die Aussparung (9) freiliegt. Der Gewindezapfen (26) wird in die Aussparung (16) eingeführt, wobei man das Verbindungselement mit einem Schlüssel bzw. einem Schraubendreher einschraubt, bis der Flansch (24) die Oberseite (8) überdeckt. Dadurch wird gewährleistet, daß an die Trennflächen der beschriebenen Teile keine Speisereste gelangen können.

**Patentansprüche**

1. Schraubenimplantat zum Verankern von prothetischen Endkonstruktionen im Mund, welches in einer Baueinheit (3) einen mit Schlüsselflächen versehenen Kopf (1), einen an dem Hals (2) ansetzenden Kern (4), sowie eine den Kern (4) umgebende Helix (5) vereinigt und in einen durch eine in die Knochensubstanz eingebrachte Vorbohrung geschaffenen Schacht unter Einschneiden der Helix (5) in den Knochen eingedreht werden kann, wobei der oberhalb der Helix (5) befindliche Teil (1) der Baueinheit zur Befestigung der Endkonstruktion dient und der Kopf (1) und der Hals (2) in den Knochen versenkbar sind, dadurch gekennzeichnet, daß der Kopf (1) und der Hals (2) zusammen mit dem anschließenden Kern (4), jedoch mit Ausnahme der in den Knochen eindrehbaren Metallschneide (11, 12) der Helix (5) mit einem keramischen Implantatüberzug (7) versehen sind.

2. Schraubenimplantat nach Anspruch 1, dadurch gekennzeichnet, daß der keramische Überzug (7) des Kopfes (1) diesen auf seiner Oberseite (8), die nach dem Implantieren mit einem Schleimhautlappen abgedeckt ist, bis zu einer axialen Aussparung (9) überdeckt, in der die Schlüsselflächen (15) und eine Ausnehmung (16) für ein Verbindungselement (17) (Attachment) vorgesehen sind, die nach Entfernung des Schleimhautlappens zugänglich ist.

3. Schraubenimplantat nach den Ansprüchen 1 oder 2, dadurch gekennzeichnet, daß der Implantatüberzug (7) aus bioaktiver Glaskeramik besteht.

4. Schraubenimplantat nach den Ansprüchen 1 oder 2, dadurch gekennzeichnet, daß als Implantatüberzug (7) eine bioinerte Keramik aufgebracht ist.

5. Schraubenimplantat nach einem oder mehreren der Ansprüche 1 bis 4, dadurch gekennzeichnet, daß die Außenkante (14) der Helix (5) einen V-förmigen Einschnitt (10) aufweist.

6. Schraubenimplantat nach einem oder mehreren der Ansprüche 1 bis 5, dadurch gekennzeichnet, daß der Hals (2) diaboloförmig eingezogen ist.

7. Schraubenimplantat nach einem oder mehreren der Ansprüche 1 bis 6, dadurch gekennzeichnet, daß es ferner ein Verbindungselement (Attachment) (17) mit einem Flansch (24) aufweist, der sich an einen mit Gewinde versehenen Zapfen (26) anschließt, in welches ein Innengewinde (27) der Ausnehmung (16) des Schaftes eindrebar ist, und die Kopfoberseite abdeckt.

8. Schraubenimplantat nach einem oder mehreren der Ansprüche 1 bis 7, dadurch gekennzeichnet, daß der Flansch (24) über einen Kegelstumpf in einen Zylinder des Verbindungselementes (17) übergeht.

9. Schraubenimplantat nach einem der Ansprüche 1 bis 8, dadurch gekennzeichnet, daß es ferner eine Matrize (36) und ein Kunststoffteil (32) aufweist, wobei das Verbindungselement (17) zur Verankerung der prothetischen Endkonstruktion als Patrize mit der Matrize (36) zusammenwirkt, welche in das Kunststoffteil (32) der Prothese einschraubbar ist.

10. Schraubenimplantat nach einem oder mehreren der Ansprüche 1 bis 9, dadurch gekennzeichnet, daß das Kunststoffteil (32) einen eingezogenen Hals (33), sowie einen Flansch (34) aufweist.

## Claims

1. A screw-type implant for anchoring upper structures in the mouth, which combines in one structural unit (3) a head (1) provided with key faces, a core (4) attached to the neck (2), together with a helical structure (5) encircling the core (4) and which can be tapped into the bone by means of a shaft formed by a hole bored into the bone substance whilst tapping helical structure (5), wherein the part (1) of the unit situated above the helical structure (5) is used to fix the upper structure, and the head (1) and the neck (2) can be sunk into the bone, characterised in that the head (1) and the neck (2) together with the attached core (4) are provided with a ceramic implant covering (7) but not the metal edges (11, 12) of the helical structure (5) which can be tapped into the bone.

2. A screw-type implant according to Claim 1, characterised in that the ceramic covering (7) of the head (1) covers the head (1) on its upper side (8), which is covered after implantation with a flap of mucous membrane, as far as an axial recess in which the key faces (15) and a cutout (16) for a connecting element (17) (attachment) are provided, which is accessible after removal of the flap of mucous membrane.

3. A screw-type implant according to Claim 1 or 2, characterised in that the implant covering (7) consists of bio-active vitreous ceramics.

4. A screw-type implant according to one or more of Claims 1 to 3, characterised in that a bio-inert ceramic material is used as the implant covering.

5. A screw-type implant according to one or more of Claims 1 to 4, characterised in that the outer edge (14) of the helical structure (5) has a V-shaped groove (10).

6. A screw-type implant according to one or more of Claims 1 to 5, characterised in that the neck (2) is pulled in in the shape of a diabolo.

7. A screw-type implant according to one or more of Claims 1 to 6, characterised in that it also has a connecting element (17) (attachment) with a flange (24) which is attached to a peg (26) provided with a thread, into which an internal thread (27) in the recess (16) in the shaft can be screwed, and covers the upper surface of the head.

8. A screw-type implant according to one or more of Claims 1 to 7, characterised in that the flange (24) passes via a truncated cone into a cylindrical part of the connecting element (17).

9. A screw-type implant according to one or more of Claims 1 to 8, characterised in that it also has a matrix (36) and a plastics part (32), wherein the connecting element (17) acts in conjunction with the matrix (36) as an upper die in order to anchor the upper structure, the matrix being screwed into the plastics part (32) of the prosthesis.

10. A screw-type implant according to one or more of Claims 1 to 9, characterised in that the plastics part (32) has a drawn in neck (33) and a flange (34).

## Revendications

1. Implant fileté servant d'élément de fixation d'une prothèse dans la bouche, comportant un ensemble unitaire (3) constitué par une tête (1) pourvue de facettes de vissage, un noyau (4) adjacent au col (2), ainsi qu'une hélice (5) entourant le noyau (4), que l'on peut enfoncer par vissage dans l'os en l'engageant dans un trou réalisé à l'avance dans la substance osseuse pour y faire mordre l'hélice (5), la partie (1) de l'ensemble unitaire située au-dessus de l'hélice (5) servant à la fixation de la prothèse, et la tête (1) ainsi que le col (2) pouvant être noyés dans l'os, caractérisé en ce que la tête (1) ainsi que le col (2) et le noyau adjacent (4) sont pourvus d'un revêtement céramique d'implantation (7), alors que ce revêtement n'existe pas sur l'arête métallique aiguë (11,12) de l'hélice (5), prévue pour mordre dans l'os.

2. Implant fileté selon la revendication 1, caractérisé en ce que le revêtement céramique (7) de la tête (1) recouvre celle-ci sur sa face supérieure - qui est couverte par un lambeau de muqueuse après la mise en place de l'implant - jusqu'à un évidement axial (9) dans lequel sont prévues les facettes de vissage (15) ainsi qu'une cavité (16) pour un élément de liaison (17) (Attachment), qui est accessible après enlèvement du lambeau de muqueuse.

3. Implant fileté selon la revendication 1 ou 2, caractérisé en ce que le revêtement (7) de l'implant est constitué par une vitrocéramique bioactive.

4. Implant fileté selon la revendication 1 ou 2, caractérisé en ce que le revêtement (7) de l'implant est constitué par une céramique bioinerte.

5. Implant fileté selon l'une ou plusieurs des revendications 1 à 4, caractérisé en ce que l'arête extérieure (14) de l'hélice (5) présente une gorge creuse (10) profiée en V.

6. Implant fileté selon l'une ou plusieurs des revendications 1 à 5, caractérisé en ce que le col (2) est rétreint en forme de diabolo.

7. Implant fileté selon l'une ou plusieurs des revendications 1 à 6, caractérisé en ce qu'il comporte en outre un élément de liaison (Attachment) (17) pourvu d'une collerette (24), qui est portée par un pivot fileté (26) pouvant se visser dans un filetage interne (27) de la cavité (16) du trou, et qui recouvre la face supérieure de la tête.

8. Implant fileté selon l'une ou plusieurs des revendications 1 à 7, caractérisé en ce que la collerette (24) se raccorde par une partie tronconique à un corps cylindrique de l'élément de liaison (17).

9. Implant fileté selon l'une des revendications 1 à 8, caractérisé en ce qu'il comporte en outre une matrice (36) et une partie en matière plastique (32), l'élément de liaison (17) prévu pour la fixation de la prothèse coopérant à la manière d'un poinçon avec la matrice (36) qui peut se visser dans la partie en matière plastique (32) de la prothèse.

10. Implant fileté selon l'une ou plusieurs des revendications 1 à 9, caractérisé en ce que la partie en matière plastique (32) présente un col de profil rétreint (33) ainsi qu'une collerette (34).

Figur 1

Figur 2

Figur 3

Figur 4

Figur 5

Figur 6